(19) Europäisches Patentamt
European Patent Office
Office européen des brevets

(11) **EP 2 364 430 B1**

(12) **EUROPÄISCHE PATENTSCHRIFT**

(45) Veröffentlichungstag und Bekanntmachung des Hinweises auf die Patenterteilung:
**02.01.2013 Patentblatt 2013/01**

(21) Anmeldenummer: **09744353.5**

(22) Anmeldetag: **03.11.2009**

(51) Int Cl.:
*G01B 21/04* (2006.01)   *G01M 1/12* (2006.01)
*G01B 5/008* (2006.01)

(86) Internationale Anmeldenummer:
**PCT/EP2009/007856**

(87) Internationale Veröffentlichungsnummer:
**WO 2010/054767 (20.05.2010 Gazette 2010/20)**

(54) **VORRICHTUNG UND VERFAHREN ZUM BESTIMMEN EINER MESSGRÖSSE AN EINEM MESSOBJEKT**

APPARATUS AND METHOD FOR DETERMINING A MEASUREMENT VARIABLE ON A MEASUREMENT OBJECT

DISPOSITIF ET PROCÉDÉ POUR DÉTERMINER UNE GRANDEUR DE MESURE SUR UN OBJET À MESURER

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **13.11.2008 DE 102008058198**

(43) Veröffentlichungstag der Anmeldung:
**14.09.2011 Patentblatt 2011/37**

(73) Patentinhaber: **Carl Zeiss Industrielle Messtechnik GmbH**
**73447 Oberkochen (DE)**

(72) Erfinder:
• **ENDERLE, Eckhard**
**73434 Aalen (DE)**
• **ENGEL, Thomas**
**73432 Aalen (DE)**
• **SAGEMUELLER, Rainer**
**73434 Aalen (DE)**
• **SCHEPPPERLE, Karl**
**73447 Oberkochen (DE)**

(74) Vertreter: **Witte, Weller & Partner**
**Königstrasse 5**
**70173 Stuttgart (DE)**

(56) Entgegenhaltungen:
DE-A1- 3 419 546   DE-A1- 3 440 571
DE-C1- 10 006 876   GB-A- 1 557 940
US-A- 5 301 544

**Beschreibung**

Die vorliegende Erfindung betrifft eine Vorrichtung zum Bestimmen einer Messgröße an einem Messobjekt, mit einem Messtisch zum Anordnen des Messobjekts, mit einer Basis, auf der der Messtisch über eine Vielzahl von Lagerstellen abgestützt ist, mit einer ersten Sensoreinrichtung, die dazu ausgebildet ist, eine Vielzahl von Messpunkten an dem Messobjekt zu identifizieren, mit einer zweiten Sensoreinrichtung, die dazu ausgebildet ist, eine Vielzahl von individuellen Lagerbelastungen zu bestimmen, wobei jede individuelle Lagerbelastung die mechanische Belastung einer Lagerstelle durch den Messtisch und das Messobjekt repräsentiert, und mit einer Auswerteeinheit zum Bestimmen der Messgröße in Abhängigkeit von den identifizierten Messpunkten, wobei die Auswerteeinheit dazu ausgebildet ist, anhand der individuellen Lagerbelastungen eine räumliche Position zu bestimmen, die eine Schwerpunktlage des Messtisches mit dem Messobjekt relativ zu den Lagerstellen repräsentiert.

Die Erfindung betrifft ferner ein Verfahren zum Bestimmen einer Messgröße an einem Messobjekt, mit den Schritten:

- Bereitstellen eines Messgerätes mit einem Messtisch zum Aufnehmen des Messobjekts, mit einer Basis, auf der der Messtisch über eine Vielzahl von Lagerstellen abgestützt ist, und mit einer ersten Sensoreinrichtung, die dazu ausgebildet ist, eine Anzahl von Messpunkten an dem Messobjekt zu identifizieren,

- Positionieren des Messobjekts auf dem Messtisch,

- Bestimmen einer Vielzahl von individuellen Lagerbelastungen, wobei jede individuelle Lagerbelastung die mechanische Belastung einer Lagerstelle durch den Messtisch und das Messobjekt repräsentiert, und

- Bestimmen der Messgröße in Abhängigkeit von den identifizierten Messpunkten, wobei anhand der individuellen Lagerbelastungen eine räumliche Position bestimmt wird, die eine Schwerpunktlage des Messtisches mit dem Messobjekt relativ zu den Lagerstellen repräsentiert und wobei die Messgröße in Abhängigkeit von der räumlichen Position bestimmt wird.

Eine solche Vorrichtung und ein solches Verfahren sind aus US 5,301,544 bekannt.

Die Erfindung betrifft insbesondere ein so genanntes Koordinatenmessgerät mit einem Messtisch und einer (zweiten) Sensoreinrichtung, mit deren Hilfe die mechanischen Belastungen bestimmbar sind, die der Messtisch und ein darauf angeordnetes Messobjekt an den Lagerstellen hervorrufen. Ein solches Koordinatenmessgerät ist aus DE 100 06 876 C1 bekannt.

Das bekannte Koordinatenmessgerät besitzt einen luftgelagerten Tisch, der über eine Anzahl von Luftlagern auf einer Basis oder einem Grundbett abgestützt ist. Die zweite Sensoreinrichtung beinhaltet eine Anzahl von Drucksensoren, mit denen es möglich ist, den Luftdruck zwischen dem jeweiligen Luftlager und der Basis zu bestimmen. Anhand der Luftdrücke lässt sich das Gewicht eines auf dem Messtisch angeordneten Messobjekts bestimmen. Es wird vorgeschlagen, das berechnete Gewicht des Messobjekts in Prüfprozessen, beim Bewegen des Messtisches und/oder in Korrekturprozessen zu berücksichtigen.

Das bekannte Koordinatenmessgerät bietet damit eine interessante Möglichkeit, um einen Messvorgang in Abhängigkeit von dem Messobjekt durchzuführen, da das Gewicht des Messobjekts sowohl die Bewegungen des Koordinatenmessgerätes als auch dessen Messgenauigkeit beeinflussen kann. Gleichwohl besteht der Wunsch, eine Alternative anzugeben, die eine sichere, zuverlässige und exakte Messung an einem Messobjekt ermöglicht, ohne dass dazu das Gewicht des Messobjekts bestimmt werden muss.

DE 36 37 410 A1 offenbart ein Verfahren zum Bestimmen von Abweichungen eines Drehtisches von einer idealen Drehachse an einem Koordinatenmessgerät. Nach diesem Verfahren wird ein spezieller Prüfkörper mit einer Vielzahl von definierten Messpunkten auf den Drehtisch aufgelegt und die Positionen der definierten Messpunkte werden anschließend mit Hilfe des Koordinatenmessgerätes in verschiedenen Winkelstellungen ermittelt. Aus den Sätzen von Messpunktkoordinaten werden dann rechnerisch die Laufabweichungen der Drehachse und die Winkelpositionsabweichung bestimmt. Auf diese Weise lassen sich axiale Abweichungen des Drehtisches, radiale Abweichungen und sogenannte Taumelabweichungen in der Bewegung des Drehtisches bestimmen.

DE 34 19 546 A1 offenbart ein Verfahren zum Ermitteln der Schwerpunktlage eines Prüfkörpers, der sehr kompliziert aufgebaut sein kann und viele Einzelteile mit unterschiedlichen spezifischen Gewichten besitzen kann, so dass die Schwerpunktlage nicht ohne Weiteres zu errechnen ist. Nach diesem Verfahren wird der Prüfkörper, der beispielsweise ein Kraftfahrzeug sein kann, auf einer Aufnahmeplatte angeordnet, die an definierten Lagerstellen auf den Tisch eines Koordinatenmessgerätes aufgelegt ist. An den Auflagestellen der Platte befinden sich Kraftmessdosen. Aus der Lageverteilung der Auflagestellen und den jeweils zugehörigen Auflagekräften kann man die Schwerpunktlage des Prüfkörpers berechnen, wobei die zunächst undefinierte Relativlage des Prüfkörpers zu der Aufnahmeplatte mit dem Koordinatenmessgerät bestimmt wird.

Aus EP 0 866 233 A2 ist eine Vorrichtung zur Funktionsüberwachung und Stillsetzung für Luftlager bekannt, die eine Druckmessung zwischen der Lagerfläche und einer Grundplatte verwendet. Ein Druckwächter oder Drucksensor ist mit einem galvanischen Schalter verbunden, der wiederum mit der Steuerung einer Maschine verbunden ist. Aus DE 197 45 216 A1 ist es bekannt, den Lagerspalt eines Luftlagers einzustellen, indem der Luftstrom gemessen wird.

Die eingangs genannte US 5,301,544 beschreibt ein Verfahren und eine Vorrichtung zum Bestimmen der Schwerpunktlage eines Gegenstandes, der auf einem Förderband transportiert wird. Unter dem Förderband sind an einer Haltestation Druckzellen angeordnet, mit deren Hilfe die Gewichtskraft des Gegenstandes auf dem Förderband bestimmt werden kann. Aus den Signalen der Druckzellen wird die Schwerpunktlage des Gegenstandes bestimmt.

DE 34 40 571 A1 beschreibt eine weitere Anordnung zum Bestimmen der Schwerpunktlage eines Gegenstandes. Hier liegt der Prüfling in einer reproduzierbaren, durch Anschlagteile vorgegebenen Lage auf einem Tragteil. Das Tragteil ist auf zumindest zwei Kraftmesselementen angeordnet. Die Koordinaten des Schwerpunktes können anhand der Kraftmesser bestimmt werden.

Eine weitere Vorrichtung zum Bestimmen der Lage des Schwerpunktes ist aus GB 1 557 940 bekannt. Auch in diesem Fall wird der Gegenstand auf einer Plattform positioniert, die auf zumindest drei Druckzellen ruht.

Vor diesem Hintergrund ist es eine Aufgabe der vorliegenden Erfindung, eine alternative Vorrichtung und ein alternatives Verfahren der eingangs genannten Art anzugeben, die eine Steuerung und/oder Überwachung und/oder Korrektur eines Messvorgangs an einem Messobjekt auf einem Messtisch ermöglichen, ohne dass das Gewicht des Messobjekts auf dem Messtisch ermittelt werden muss.

Diese Aufgabe wird nach einem ersten Aspekt der vorliegenden Erfindung durch eine Vorrichtung der eingangs genannten Art gelöst, wobei die Auswerteeinheit ferner dazu ausgebildet ist, anhand der individuellen Lagerbelastungen eine erste Kenngröße zu bestimmen, die eine Neigung des Messtisches relativ zu der Basis in Abhängigkeit von dem Messobjekt repräsentiert, wobei die Auswerteeinheit dazu ausgebildet ist, die Messgröße in Abhängigkeit von der ersten Kenngröße zu bestimmen.

Gemäß einem weiteren Aspekt wird diese Aufgabe durch ein Verfahren der eingangs genannten Art gelöst, wobei anhand der individuellen Lagerbelastungen eine erste Kenngröße bestimmt wird, die eine Neigung des Messtisches relativ zu der Basis in Abhängigkeit von dem Messobjekt repräsentiert, und wobei die Messgröße ferner in Abhängigkeit von der ersten Kenngröße bestimmt wird.

Die neue Vorrichtung und das neue Verfahren verwenden somit die Lage des Massenschwerpunktes des Messtisches mit dem darauf angeordneten Messobjekt als eine zentrale Größe, um in Abhängigkeit davon den Messvorgang zu gestalten. Die Schwerpunktlage kann ohne Kenntnis des Messobjektgewichts allein anhand der individuellen Lagerbelastungen und der bekannten Positionen der Lagerstellen auf sehr einfache und effiziente Weise bestimmt werden. Andererseits ermöglicht die Kenntnis der Schwerpunktlage eine schnelle Entscheidung darüber, ob ein Messvorgang und/oder eine Bewegung des Messtisches relativ zu der Basis freigegeben werden kann oder nicht. Damit ist ein sicherer und zuverlässiger Betrieb eines Koordinatenmessgerätes oder einer ähnlichen Vorrichtung möglich. Darüber hinaus kann aus der Schwerpunktlage auf ein Kippmoment des Messtisches geschlossen werden, wobei ein großes Kippmoment darauf hindeutet, dass der Messtisch gegenüber seiner idealen Ausgangsposition stark gekippt ist und somit schräg steht. Eine etwaige Schrägstellung kann die Messgenauigkeit der Vorrichtung beeinträchtigen und darüber hinaus zu Beschädigungen der Lagerstellen führen. Anhand der Schwerpunktlage und/oder des Kippmoments lassen sich solche unerwünschten Messszenarien schnell und zuverlässig erkennen und korrigieren.

Insgesamt ermöglicht die Bestimmung und Auswertung der Schwerpunktlage des Messtisches mit dem Messobjekt daher eine sichere, zuverlässige und genaue Vermessung eines Messobjektes, ohne dass das Gewicht des Messobjektes benötigt wird oder ermittelt werden muss. Die oben genannte Aufgabe ist daher vollständig gelöst.

In einem bevorzugten Ausführungsbeispiel wird die erste Kenngröße bestimmt, indem ein Normalenvektor orthogonal zu einer (fiktiven) Ebene bestimmt wird, die nach einem Optimierungskriterium in die Punktmenge der individuellen Lagerbelastungen eingepasst wird.

Wenn der Messtisch ideal gerade steht und eine symmetrische Gewichtsverteilung besitzt, sind die einzelnen Lagerstellen gleich belastet. Unterschiede in den individuellen Belastungen der Lagerstellen deuten auf eine Neigung des Messtisches relativ zu der Basis hin, die durch Einpassung einer fiktiven Tischebene sehr einfach und schnell bestimmt werden kann. Die Berechnung eines Messobjektgewichts ist auch in diesem Fall unnötig und wird vorteilhafterweise vermieden.

Zudem wird die Neigung des Messtisches relativ zu der Basis bei der Bestimmung der Messgröße an dem Messobjekt berücksichtigt.

Somit kann der sogenannte Taumelfehler, der sich beim Drehen eines geneigten Messtisches ergibt, auf sehr einfache und effiziente Weise korrigiert werden.

In einer bevorzugten Ausgestaltung der Erfindung besitzt jede Lagerstelle eine definierte Lagerstellenposition relativ zu der Basis, wobei die Auswerteeinheit dazu ausgebildet ist, die räumliche Position anhand der definierten Lagerstellenpositionen und anhand der individuellen Lagerbelastungen an den definierten Lagerstellenpositionen zu bestimmen.

In dieser Ausgestaltung wird die Schwerpunktlage in einer Ebene parallel zu der Basis direkt anhand der definierten Lagerstellenpositionen und individuellen Lagerbelastungen berechnet, was eine sehr schnelle und einfache Vorgehensweise ist, insbesondere wenn die Lagerstellen Luftlager sind, bei denen die individuelle Lagerbelastung in Form eines Luftdrucks und/oder Luftstroms (Luftdurchsatz) zur Verfügung steht.

In einer besonders bevorzugten Ausgestaltung besitzt die neue Vorrichtung eine Anzeige, die dazu ausgebildet ist, die räumliche Position, d.h. die Schwerpunktlage, anzuzeigen. Vorzugsweise wird die räumliche Position bzw. Schwerpunktlage graphisch in einer Ebene dargestellt, die die Tischoberfläche des Messtisches repräsentiert. In bevorzugten Ausführungsbeispielen kann die Anzeige einen maximalen Radius darstellen, innerhalb dessen sich die Schwerpunktlage befinden muss, um eine Fehlbelastung des Messtisches zu vermeiden. Alternativ oder ergänzend kann die Anzeige auch einen weiteren Radius beinhalten innerhalb dessen sich die Schwerpunktlage befinden muss, um einen akzeptablen Taumelfehler nicht zu überschreiten. Es kann ferner der Betrag und die Richtung angezeigt werden, in die das Werkstück verschoben werden muss, um eine akzeptable Schwerpunktlage zu erhalten.

Diese Ausgestaltung ist eine sehr einfache und kostengünstige Möglichkeit, um dem Bediener der neuen Vorrichtung eine visuelle Hilfe zur Optimierung des Messvorgangs zu geben. Der Bediener kann das Messobjekt durch Ausrichten in Abhängigkeit von der angezeigten Schwerpunktlage optimal auf dem Messtisch positionieren. Ein Verkippen des Messtisches und eine daraus resultierende Messabweichung wird auf sehr effiziente und komfortable Weise ausgeschlossen.

In einer weiteren Ausgestaltung ist der Messtisch ein Drehtisch, der an eine Vielzahl von unterschiedlichen Drehpositionen um eine Drehachse herum drehbar ist, wobei die Auswerteeinheit dazu ausgebildet ist, die räumliche Position für die verschiedenen Drehpositionen zu bestimmen. In einer Ausgestaltung wird die räumliche Position durch eine Mittelwertbildung aus mehreren Schwerpunktlagen über den bestimmt. Diese können von verschiedenen Drehpositionen stammen, wenn man den damit verbundenen Positionswechsel berücksichtigt. Alternativ oder ergänzend können die mehreren Schwerpunktlagen durch ein wiederholtes Auslesen der zweiten Sensoreinrichtung ermittelt werden. Des Weiteren ist es möglich, die Schwerpunktlage während eines Messvorgangs wiederholt zu bestimmen.

Diese Ausgestaltungen ermöglichen eine noch höhere Messgenauigkeit sowohl bei der Bestimmung der Schwerpunktlage als auch bei der Bestimmung der Messgröße an dem Messobjekt. Zudem lassen sich mit diesen Ausgestaltungen die Messungenauigkeiten minimieren, die sich bei einem Drehtisch aufgrund seiner Freiheitsgrade zwangsläufig ergeben. Andererseits ermöglicht ein Drehtisch eine sehr effiziente und schnelle Durchführung einer komplexen Messaufgabe, in deren Verlauf eine Vielzahl von Messgrößen an einem Messobjekt bestimmt werden sollen.

In einer weiteren Ausgestaltung variiert jede individuelle Lagerbelastung beim Drehen des Drehtisches mit einem weitgehend periodischen Muster, wobei die Auswerteeinheit ferner dazu ausgebildet ist, eine Drehtischgeschwindigkeit des Drehtisches anhand von zumindest einem der Muster zu bestimmen. In einer weiteren Variante dieser Ausgestaltung kann der Drehtisch eine bewusste unsymmetrische Gewichtsverteilung relativ zu der Drehtischachse aufweisen, um die Ausbildung eines weitgehend periodischen Musters zu verstärken. Alternativ oder ergänzend kann eine Unsymmetrie bei luftgelagerten Drehtischen durch eine unsymmetrische Lagervorspannung erzeugt werden, insbesondere mit Hilfe einer magnetisch eingestellten Lagervorspannung.

Üblicherweise besitzt jeder Drehtisch zumindest in geringem Maße eine unsymmetrische Gewichtsverteilung rund um seine Drehachse, was beim Drehen des Drehtisches zu der Ausbildung von weitgehend periodischen Mustern in Bezug auf die individuellen Lagerbelastungen führt. Die Unsymmetrie wirkt sich beim Drehen der Reihe nach in den individuellen Lagerbelastungen aus. Die Periode oder Frequenz der Muster ist ein Maß für die Drehgeschwindigkeit des Drehtisches. Diese Ausgestaltung ermöglicht auf sehr einfache und effiziente Weise, die Drehgeschwindigkeit des Drehtisches zu bestimmen. Die erhaltene Geschwindigkeit kann vorteilhaft als redundante Information zur sicherheitstechnischen Überwachung der Drehbewegung verwendet werden.

In einer weiteren Ausgestaltung ist die Auswerteeinheit dazu ausgebildet, ein erstes Fehlersignal zu erzeugen, wenn die erste Kenngröße einen definierten ersten Schwellenwert überschreitet.

In dieser Ausgestaltung wird ein Fehlersignal erzeugt, wenn die Neigung des Messtisches einen definierten Schwellenwert überschreitet. Diese Ausgestaltung trägt vorteilhaft dazu bei, Schäden an der Vorrichtung infolge einer stark unsymmetrischen Beladung des Messtisches zu vermeiden. Dies ist besonders kritisch bei Messtischen, die auf Luftlagern gelagert sind, da eine stark einseitige Belastung dazu führen kann, dass die Luftaustrittsöffnung eines oder mehrerer Luftlagers auf ihrer jeweiligen Gegenfläche aufsetzen und beschädigt werden. Auch diese vorteilhafte Ausgestaltung wird bei der neuen Vorrichtung und dem neuen Verfahren sehr einfach und schnell und ohne Ermittlung oder Kenntnis des Messobjektgewichts erreicht.

In einer weiteren Ausgestaltung ist die Auswerteeinheit ferner dazu ausgebildet, eine zweite Kenngröße zu bestimmen, die einen Mittelwert der individuellen Lagerbelastungen repräsentiert, und ferner ein zweites Fehlersignal zu erzeugen, wenn die zweite Kenngröße einen definierten zweiten Schwellenwert überschreitet.

Der Mittelwert aller individuellen Lagerbelastungen ist ein Maß für die Gesamtbelastung des Messtisches. In dieser Ausgestaltung wird die Gesamtbelastung des Messtisches auf sehr einfache und effiziente Weise überwacht, ohne dass das Gewicht des Messobjekts bestimmt werden muss. Die Ausgestaltung ergänzt die neue Vorrichtung und das neue Verfahren somit um einen weiteren Aspekt, der eine noch sicherere und zuverlässigere Bestimmung der Messgröße an einem Messobjekt ermöglicht.

In einer weiteren Ausgestaltung sind die Lagerstellen Luftlager, wobei die erste Sensoreinrichtung Druck- und/oder Durchflussmesser beinhaltet, um die individuellen Lagerbelastungen zu bestimmen.

In dieser Ausgestaltung, die für sich genommen in Verbindung mit einem Messtisch bekannt ist, kommen die Vorteile der neuen Vorrichtung und des neuen Verfahrens besonders vorteilhaft zur Geltung, weil die individuellen Lagerbelastungen in dieser Ausgestaltung sehr einfach und schnell anhand der Druck- und/oder Durchflusswerte an den Luftlagern zur Verfügung stehen. Andererseits ist die Überwachung und gegebenenfalls Korrektur einer Messtischneigung infolge einer unsymmetrischen Beladung gerade bei luftgelagerten Messtischen von großer Bedeutung, da die Luftlager prinzipbedingt ein gewisses Spiel besitzen. Die Bestimmung und Verwendung der Schwerpunktlage ist eine sehr einfache und effiziente Möglichkeit, um die Genauigkeit und Zuverlässigkeit beim Messen zu erhöhen und Fehler oder Beschädigungen infolge einer einseitigen Überlastung zu vermeiden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine vereinfachte Darstellung eines Koordinatenmessgerätes gemäß einem Ausführungsbeispiel der vorliegenden Erfindung,

Fig. 2    das Koordinatenmessgerät aus Fig. 2 in einer Ansicht parallel zur y-Achse,

Fig. 3    das Koordinatenmessgerät gemäß Fig. 2 mit einem geneigten Messtisch (stark übertrieben dargestellt),

Fig. 4    eine graphische Darstellung zur Erläuterung eines bevorzugten Ausführungsbeispiels, in dem eine Messtischneigung anhand einer Ebeneneinpassung bestimmt wird,

Fig. 5    ein Display mit einer graphischen Darstellung der Schwerpunktlage gemäß einem bevorzugten Ausführungsbeispiel der Erfindung, und

Fig. 6    ein weitgehend periodisches Muster, anhand dessen eine Drehgeschwindigkeit des Drehtisches bei dem Koordinatenmessgerät gemäß Fig. 1 bestimmt werden kann.

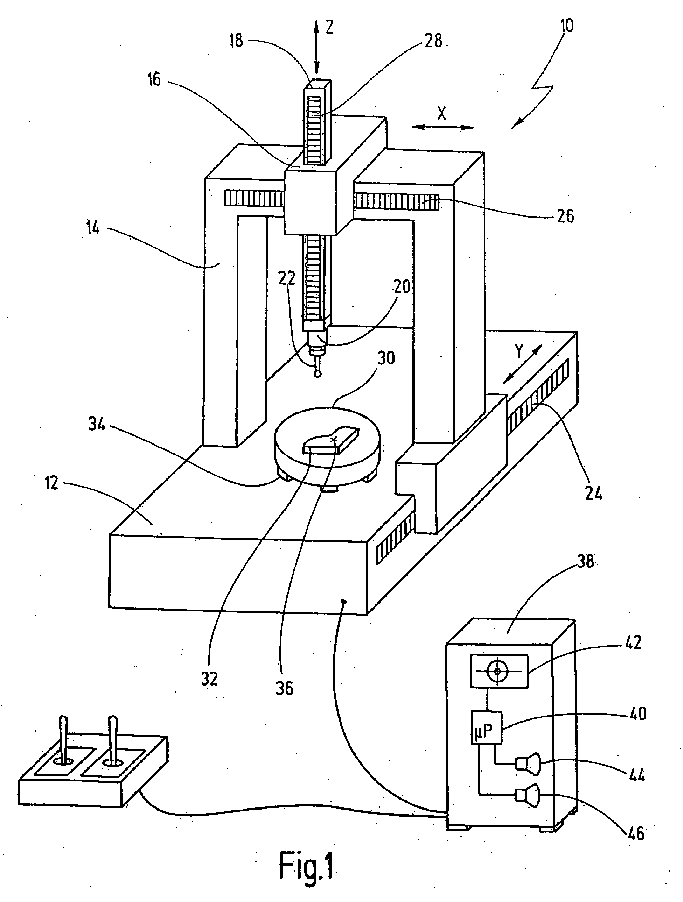

In Fig. 1 ist ein Ausführungsbeispiel der neuen Vorrichtung in Form eines Koordinatenmessgerätes 10 dargestellt. Die Erfindung ist jedoch nicht auf Koordinatenmessgeräte im engeren Sinne beschränkt, d.h. auf Messgeräte, bei denen mit Hilfe einer geeigneten (ersten) Sensoreinrichtung Raumkoordinaten von Messpunkten an einem Messobjekt bestimmt werden. Die Erfindung kann gleichermaßen bei anderen Arten von Messgeräten eingesetzt werden, bei denen das Messobjekt auf einem Messtisch mit einer Vielzahl von separaten Lagerstellen angeordnet ist.

Das Koordinatenmessgerät 10 besitzt eine Basis 12, auf der hier ein Portal 14 angeordnet ist. Das Portal 14 kann in einer ersten Längsrichtung bewegt werden, die üblicherweise als y-Achse bezeichnet wird. Am oberen Querträger des Portals 14 ist ein Schlitten 16 angeordnet, der entlang einer zweiten Längsachse bewegt werden kann. Diese zweite Längsachse wird üblicherweise als x-Achse bezeichnet. An dem Schlitten 16 ist eine Pinole 18 angeordnet, die entlang einer dritten Längsachse bewegt werden kann. Die dritte Längsachse wird üblicherweise als z-Achse bezeichnet. Typischerweise stehen die drei Längsachsen x, y und z senkrecht zueinander.

Am unteren freien Ende der Pinole 18 ist ein Tastkopf 20 mit einem Taststift 22 angeordnet. Der Tastkopf 20 kann mit Hilfe des Portals 14, des Schlittens 16 und der Pinole 18 innerhalb eines Messvolumens entlang der drei Achsen x, y, z bewegt werden. Der Tastkopf 20 und der Taststift 22 bilden zusammen eine erste Sensoreinrichtung im Sinne der vorliegenden Erfindung. Mit Hilfe der ersten Sensoreinrichtung kann ein Messpunkt an einem Messobjekt identifiziert werden, indem der Messpunkt mit der freien Spitze des Taststiftes 22 angetastet wird. Mit den Bezugsziffern 24, 26, 28 sind drei Skalen bezeichnet, mit deren Hilfe man die Raumposition oder Raumkoordinaten eines angetasteten Messpunktes entlang der drei Achsen x, y, z bestimmen kann. Durch Antasten mehrerer Messpunkte und Bestimmen von entsprechenden Raumkoordinaten kann man Abmessungen (Länge einer Kante, Durchmesser einer Bohrung etc.) oder sogar die Raumform eines Messobjekts bestimmen.

Das in Fig. 1 dargestellte Koordinatenmessgerät mit einem taktilen Tastkopf ist ein bevorzugtes Ausführungsbeispiel. Die Erfindung ist darauf jedoch nicht beschränkt und kann gleichermaßen bei einem Messgerät in Ständerbauweise und/oder bei Messgeräten mit berührungslosen Sensoreinrichtungen angewendet werden, beispielsweise bei Messgeräten mit optischen Sensoren.

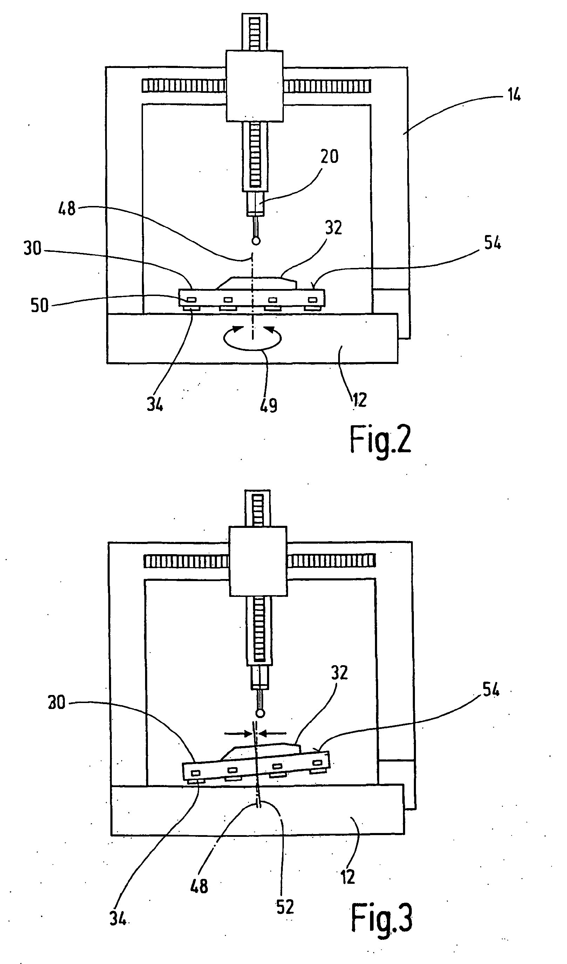

Mit der Bezugsziffer 30 ist ein Messtisch bezeichnet, auf dem hier ein Messobjekt 32 angeordnet ist. Der Messtisch 30 ist über eine Vielzahl von Lagerstellen 34 auf der Basis 12 gelagert. In bevorzugten Ausführungsbeispielen sind die Lagerstellen 34 Luftlager, die ein Luftpolster zwischen der Basis 12 und dem luftgelagerten Messtisch 30 ausbilden. In einem besonders bevorzugten Ausführungsbeispiel ist der Messtisch 30 ein runder Drehtisch (vgl. Fig. 2), der über sieben Luftlager auf der Basis 12 gelagert ist, wobei die sieben Luftlager an der Unterseite des Drehtisches 30 gleichmäßig entlang des Außenumfangs verteilt sind.

Mit der Bezugsziffer 36 ist eine räumliche Position bezeichnet, die hier den Schwerpunkt des Messtisches 30 mit dem darauf angeordneten Messobjekt 32 repräsentiert. Wie man anhand Fig. 1 erkennen kann, kann dieser Schwerpunkt aufgrund des Messobjekts 32 abseits von dem Kreismittelpunkt oder Zentrum des Messtisches 30 liegen, was insbesondere dann der Fall ist, wenn der Massenschwerpunkt des Messobjekts 32 radial außerhalb von dem Kreismittelpunkt des Messtisches 30 liegt.

Mit der Bezugsziffer 38 ist eine Auswerte- und Steuereinheit bezeichnet, die einerseits dazu dient, die Bewegungen des Koordinatenmessgeräts 10 einschließlich der Bewegung des Tastkopfes 20 und des Drehtisches 30 über hier nicht dargestellte Antriebe zu steuern. Andererseits dient die Auswerte- und Steuereinheit 38 dazu, die Raumkoordinaten eines mit dem Taststift 22 angetasteten Messpunktes an dem Messobjekt 32 anhand der Messwerte von den Skalen 24, 26, 28 sowie daraus abgeleitete Messgrößen zu bestimmen, wie etwa die Länge einer Kante, die Tiefe oder der Durchmesser einer Bohrung etc.

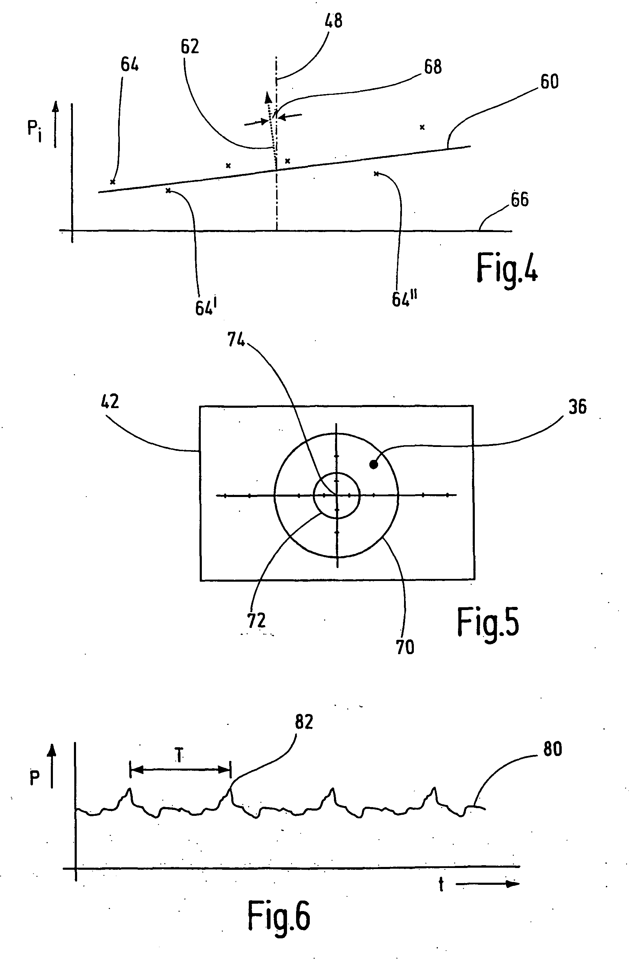

Die Auswerte- und Steuereinheit 38 besitzt in an sich bekannter Weise einen Prozessor 40, auf dem ein Auswerte- und Steuerprogramm (hier nicht dargestellt) ausgeführt wird. In bevorzugten Ausführungsbeispielen besitzt die Auswerte- und Steuereinheit 38 ferner eine Anzeige 42, auf der die jeweilige Schwerpunktlage des Messtisches 30 mit dem darauf angeordneten Messobjekt 32, also die räumliche Position 36, angezeigt wird (siehe Fig. 5).

Mit der Bezugsziffer 44 ist ein erstes Fehlersignal bezeichnet, mit der Bezugsziffer 46 ist ein zweites Fehlersignal bezeichnet. Die Fehlersignale 44, 46 werden in bevorzugten Ausführungsbeispielen von dem Prozessor 40 erzeugt, wenn der Messtisch 30 aufgrund einer einseitigen Belastung durch das Messobjekt 32 zu stark gekippt ist und/oder insgesamt überlastet ist. In den bevorzugten Ausführungsbeispielen beinhalten die Fehlersignale 44, 46 eine Warnmeldung für den Bediener des Koordinatenmessgerätes 10 sowie ein Stoppsignal, das eine Inbetriebnahme des Koordinatenmessgerätes 10 verhindert.

In der Seitenansicht gemäß Fig. 2 ist die Drehachse 48 des drehbaren Messtisches 30 dargestellt. Der Messtisch 30 kann in Richtung des Pfeils 49 um die Drehachse 48 herum gedreht werden, wobei der Messtisch 30 auf Luftpolstern gleitet, die mit Hilfe der Luftlager 34 erzeugt werden. Mit der Bezugsziffer 50 ist ein Drucksensor bezeichnet, wobei der Messtisch 30 eine Vielzahl von Drucksensoren 50 besitzt, um den individuellen Luftdruck an jedem Luftlager 34 zu bestimmen. Die mit Hilfe der Drucksensoren 50 bestimmten Luftdrücke repräsentieren die individuelle Lagerbelastung an dem jeweils zugeordneten Luftlager 34. Mit anderen Worten bilden die Drucksensoren 50 eine zweite Sensoreinrichtung, die dazu ausgebildet ist, eine Vielzahl von individuellen Lagerbelastungen zu bestimmen, wobei jede individuelle Lagerbelastung die mechanische Belastung eines Luftlagers 34 repräsentiert, die aufgrund der Schwerkraft durch den Messtisch 30 und das darauf angeordnete Messobjekt 32 hervorgerufen wird. In anderen Ausführungsbeispielen können anstelle oder in Ergänzung zu den Drucksensoren 50 Durchflussmesser (hier nicht dargestellt) verwendet werden, mit deren Hilfe die Menge der an den einzelnen Luftlagern 34 ausströmenden Luft bestimmt werden kann. Sowohl der Luftdruck als auch die durchströmende Luftmenge sind dazu geeignet, die jeweilige individuelle Lagerbelastung der Luftlager 34 zu repräsentieren.

Darüber hinaus können in weiteren Ausführungsbeispielen Kraftmessdosen, Wiegezellen oder andere Sensoren verwendet werden, mit deren Hilfe eine individuelle Lagerbelastung an einer von mehreren Lagerstellen eines Messtisches 30 bestimmbar ist.

Wie anhand Fig. 3 dargestellt ist, kann der Messtisch 30 bei einer ungünstigen Beladung mit einem Messobjekt 32 zur Seite kippen. Im Extremfall kann dies dazu führen, dass ein oder mehrere Luftlager 34 auf der Basis 12 aufsetzen, was bei einer nachfolgenden Bewegung des Messtisches 30 zu einer Beschädigung der Basis und/oder des Luftlagers 34 führen kann. Hinzu kommt, dass die Tischachse 52 senkrecht zur Tischoberfläche 54 in einem solchen Fall schräg zu der Drehachse 48 des Messtisches 30 steht, was einen sogenannten Taumelfehler hervorruft. In bevorzugten Ausführungsbeispielen wird daher der Neigungswinkel der Tischachse 52 relativ zu der Drehachse 48 bestimmt und es wird in Abhängigkeit von einer Kenngröße, die die Neigung des Messtisches 30 relativ zu der Basis 12 repräsentiert, eine Taumelfehlerkorrektur durchgeführt, indem alle erhaltenen Messwerte rechnerisch um den neigungs- und positionsabhängigen Taumelfehler korrigiert werden.

Fig. 4 zeigt ein bevorzugtes Ausführungsbeispiel für ein Verfahren zum Bestimmen einer ersten Kenngröße, die für die Neigung des Messtisches 30 relativ zu der Basis 12 und damit für den Taumelfehler repräsentativ ist. Mit der Bezugsziffer 60 ist eine fiktive Ebene bezeichnet, deren Lage durch einen Normalenvektor 62 charakterisiert ist. Der Normalenvektor 62 steht orthogonal auf der Ebene 60. Mit den Bezugsziffern 64, 64', 64" sind Druckwerte bezeichnet, die an den verschiedenen Lagerstellen 34 mit Hilfe eines jeweils zugeordneten Drucksensors 50 bestimmt wurden. Die Ebene 60 ist hier nach einem Optimierungskriterium in die erhaltenen Druckwerte 64 eingepasst. In einem Ausführungsbeispiel kann das Optimierungskriterium die Methode der kleinsten Quadrate sein, d.h. eine Minimierung der quadratischen Abweichung zwischen jedem Druckwert 64 und der fiktiven Ebene 60. Es versteht sich, dass die einzelnen Druckwerte 64 zu diesem Zweck vorteilhaft über einer zweidimensionalen Grundebene 66 (hier nur in einer Seitenansicht dargestellt) angenommen werden, die der Basis 12 entspricht. Die einzelnen Druckwerte 64 sind über der Grundebene 66 in derselben Weise verteilt, wie die Lagerstellen 34 und die jeweils zugeordneten Drucksensoren 50 über der Basis 12. Der Winkel 68 zwischen der Drehachse 48, die hier stellvertretend für eine Flächennormale orthogonal zu der Grundebene 66 steht, und dem Normalenvektor 62 ist eine erste Kenngröße, die die Neigung des Messtisches 30 relativ zu der Basis 12 repräsentiert. In bevorzugten Ausführungsbeispielen wird die erste Kenngröße 68 nicht nur zur Korrektur des Taumelfehlers verwendet, sondern es wird ferner das erste Fehlersignal 44 erzeugt, wenn die erste Kenngröße 68 einen definierten ersten Schwellenwert überschreitet, d.h. wenn der Neigungswinkel zu groß ist und der Messtisch 30 dementsprechend zu stark zu einer Seite gekippt ist.

Fig. 5 zeigt ein bevorzugtes Ausführungsbeispiel für die Anzeige 42, auf der die räumliche Position 36 entsprechend der Schwerpunktlage symbolisch dargestellt ist. Die Anzeige 42 zeigt eine Draufsicht senkrecht auf die Basis 12. Ein erster Kreisring 70 zeigt vorteilhaft die sogenannte Kippmomentgrenze an, d.h. der Schwerpunkt bzw. die räumliche Position 36 muss sich innerhalb des Kreisrings 70 befinden, um ein Aufsetzen des Messtisches 30 auf der Basis 12 zu vermeiden. Ein zweiter konzentrischer, innenliegender Kreisring 72 symbolisiert einen Zielkreis, in dem der Schwerpunkt bzw. die räumliche Position 36 liegen sollte, um eine stabile und exakte Messung durchzuführen. Bei dem in Fig. 5 dargestellten Ausführungsbeispiel müsste das Messobjekt 32 folglich in Richtung "8 Uhr" verschoben werden, um die räumliche Position 36 bzw. die Schwerpunktlage in den Zielbereich innerhalb des Kreisrings 72 zu bringen.

Zur Berechnung der räumlichen Position 36 wird in einem bevorzugten Ausführungsbeispiel die Schwerpunktlage innerhalb einer Ebene parallel zu der Basis 12 anhand der einzelnen Lagerdrücke (individuellen Lagerbelastungen) und den bekannten Abständen der einzelnen Lagerstellen 34 von der Mitte des Messtisches 30 berechnet. Für ein Ausführungsbeispiel, in dem sämtliche Lagerstellen 34 kreisringförmig und mit demselben radialen Abstand zum Zentrum des Messtisches 30 angeordnet sind, kann man die Position der einzelnen Lagerstellen 34 in einer komplexen Ebene beschreiben als:

$$\vartheta_i = (\cos(\alpha_i) + i \cdot \sin(\alpha_i)) \cdot r_i,$$

wobei $r_i$ der Radius bzw. der Abstand zwischen dem Mittelpunkt des Messtisches 30 und der jeweiligen Lagerstelle i ist, $\alpha_i$ den Winkel der Lagerstelle i innerhalb der komplexen Ebene bezeichnet, und i ein Index ist, mit dem die einzelnen Lagerstellen 34 voneinander unterschieden werden.

Für die Berechnung der Schwerpunktlage innerhalb der ebene parallel zur Basis 12 gilt dann:

$$S = \frac{\sum_{i=1}^{n} \vartheta_i \cdot u_i}{\sum_{i=1}^{n} u_i},$$

wobei $u_i$ der Druck oder eine dazu proportionale Größe an der jeweiligen Lagerstelle i ist.

Die Polarkoordinaten des Schwerpunkts innerhalb der komplexen Ebene ergeben sich dann als

$$\rho = |S|$$

und

$$\theta = \arctan\left(\frac{\mathrm{Im}(S)}{\mathrm{Re}(S)}\right) \cdot \frac{180}{\pi},$$

wobei $\rho$ der Abstand des Schwerpunkts vom Zentrum des Messtisches 30 bzw. vom Zentrum der komplexen Ebene ist, und wobei $\theta$ die Winkellage des Schwerpunkts innerhalb der komplexen Ebene ist.

In besonders bevorzugten Ausführungsbeispielen wird die räumliche Position 36 bzw. die Schwerpunktlage mehrfach bestimmt und die erhaltenen Positionswerte werden gemittelt. In diesen Ausführungsbeispielen ergibt sich die räumliche Position 36 bzw. die Schwerpunktlage zu:

$$\bar{S} = \frac{\sum_{i=1}^{ns} S}{ns},$$

wobei $\bar{S}$ die gemittelte Schwerpunktlage über n Messungen ist.

Die Positionswerte $\rho$, $\theta$ für den Schwerpunkt Ebene lassen sich vorteilhaft direkt verwenden, um die räumliche Position 36 auf der Anzeige 42 anzuzeigen, da die Anzeige 42 in den bevorzugten Ausführungsbeispielen die komplexe Ebene mit dem Zentrum des Messtisches 30 als Koordinatenursprung 74 zeigt.

In bevorzugten Ausführungsbeispielen werden ferner die Druckmesswerte der Sensoren 50, die die individuellen Lagerbelastungen an den Lagerstellen 34 repräsentieren, gemittelt, um einen Mittelwert aller individuellen Lagerbelastungen zu erhalten. Der Mittelwert der individuellen Lagerbelastungen ist eine zweite Kenngröße, die einen Hinweis auf eine Überlastung des Messtisches 30 unabhängig von einer Neigung des Messtisches 30 relativ zu der Basis 12 anzeigt. Dementsprechend wird in den bevorzugten Ausführungsbeispielen ein zweites Fehlersignal 46 erzeugt, wenn die zweite Kenngröße einen definierten zweiten Schwellenwert überschreitet, d.h. wenn der Messtisch 30 insgesamt zu schwer beladen ist.

Des Weiteren wird in bevorzugten Ausführungsbeispielen die Drehgeschwindigkeit des Drehtisches anhand eines zeitlichen Verlaufs der individuellen Lagerbelastungen 30 überwacht. Fig. 6 zeigt beispielhaft einen Druckverlauf über der Zeit, der die individuelle Lagerbelastung an einer Lagerstellung 34 beim Drehen des Drehtisches repräsentiert. Man erkennt ein periodisches Muster 80 mit Spitzenwerten 82, die sich jeweils nach einer Periode T wiederholen. Die Periode T entspricht der Zeit, die der Drehtisch 30 für eine Umdrehung benötigt. Der Spitzenwert 82 wiederholt sich immer dann, wenn die Lagerstelle 34 maximal belastet wird, was insbesondere aufgrund von Unsymmetrien bei der Beladung der Fall ist. Darüber hinaus kann eine Unsymmetrie in Ausführungsbeispielen künstlich hervorgerufen werden, indem man den Drehtisch 30 bewusst mit einer Unwucht versieht, beispielsweise durch ein Zusatzgewicht. Die auf diese Weise ermittelte Drehgeschwindigkeit kann vorteilhaft als unabhängiges Messsystem verwendet werden, das in Ergänzung zu einer weiteren Geschwindigkeitsinformation von einem Drehgeber (hier nicht dargestellt) redundante Signale für eine sicherheitsrelevante Überwachung der Drehgeschwindigkeit bietet.

Allen bevorzugten Ausführungsbeispielen ist gemeinsam, dass die Masse bzw. das Gewicht des Messobjekts auf dem Drehtisch weder bekannt sein muss noch im Verlauf der Messung bestimmt werden muss. Es genügt vielmehr, die individuellen Lagerbelastungen, insbesondere in Form von Druckwerten und/oder Durchsatzwerten, in den beschriebenen Varianten auszuwerten, um eine sichere, zuverlässige und genaue Bestimmung einer Messgröße an einem Messobjekt zu ermöglichen. Die Schwerpunktlage lässt sich ohne Kenntnis der Masse überraschend einfach und schnell bestimmen.

**Patentansprüche**

1. Vorrichtung zum Bestimmen einer Messgröße an einem Messobjekt (32), mit

   - einem Messtisch (30) zum Anordnen des Messobjekts (32),
   - einer Basis (12), auf der der Messtisch (30) über eine Vielzahl von Lagerstellen (34) abgestützt ist,
   - einer ersten Sensoreinrichtung (20, 22), die dazu ausgebildet ist, eine Anzahl von Messpunkten an dem Messobjekt (32) zu identifizieren,
   - einer zweiten Sensoreinrichtung (50), die dazu ausgebildet ist, eine Vielzahl von individuellen Lagerbelastungen (64) zu bestimmen, wobei jede individuelle Lagerbelastung (64) die mechanische Belastung einer Lagerstelle (34) durch den Messtisch (30) und das Messobjekt (32) repräsentiert, und
   - einer Auswerteeinheit (38) zum Bestimmen der Messgröße in Abhängigkeit von den identifizierten Messpunkten,

   wobei, die Auswerteinheit (38) dazu ausgebildet ist, anhand der individuellen Lagerbelastungen (64) eine räumliche Position (36) zu bestimmen, die eine Schwerpunktlage des Messtisches (30) mit dem Messobjekt (32) relativ zu den Lagerstellen (34) repräsentiert, **dadurch gekennzeichnet, dass** die Auswerteeinheit (38) ferner dazu ausgebildet ist, anhand der individuellen Lagerbelastungen (64) eine erste Kenngröße (68) zu bestimmen, die eine Neigung des Messtisches (30) relativ zu der Basis (12) in Abhängigkeit von dem Messobjekt (32) repräsentiert, wobei die Auswerteeinheit (38) dazu ausgebildet ist, die Messgröße in Abhängigkeit von der ersten Kenngröße (68) zu bestimmen.

2. Vorrichtung nach Anspruch 1, **dadurch gekennzeichnet, dass** jede Lagerstelle (34) eine definierte Lagerstellenposition relativ zu der Basis (12) besitzt, wobei die Auswerteinheit (38) dazu ausgebildet ist, die räumliche Position (36) anhand der definierten Lagerstellenpositionen und anhand der individuellen Lagerbelastungen (64) an den definierten Lagerstellenpositionen (34) zu bestimmen.

3. Vorrichtung nach Anspruch 1 oder 2, **gekennzeichnet durch** eine Anzeige (42), die dazu ausgebildet ist, die räumliche Position (36) anzuzeigen.

4. Vorrichtung nach einem der Ansprüche 1 bis 3, **dadurch gekennzeichnet, dass** der Messtisch (30) ein Drehtisch ist, der an eine Vielzahl von unterschiedlichen Drehpositionen um eine Drehachse (48) herum drehbar ist, wobei die Auswerteeinheit (38) dazu ausgebildet ist, die räumliche Position (36) für die verschiedenen Drehpositionen zu bestimmen.

5. Vorrichtung nach Anspruch 4, **dadurch gekennzeichnet, dass** jede individuelle Lagerbelastung (64) beim Drehen des Drehstisches (30) mit einem weitgehend periodischen Muster (80) variiert, wobei die Auswerteeinheit (38) ferner dazu ausgebildet ist, eine Drehgeschwindigkeit des Drehtisches (30) anhand von zumindest einem Muster (80) zu bestimmen.

6. Vorrichtung nach einem der Ansprüche 1 bis 5, **dadurch gekennzeichnet, dass** die Auswerteeinheit (38) dazu ausgebildet ist, ein erstes Fehlersignal (44) zu erzeugen, wenn die erste Kenngröße (68) einen definierten ersten Schwellenwert überschreitet.

7. Vorrichtung nach einem der Ansprüche 1 bis 6, **dadurch gekennzeichnet, dass** die Auswerteeinheit (38) ferner dazu ausgebildet ist, eine zweite Kenngröße zu bestimmen, die einen Mittelwert der individuellen Lagerbelastungen (64) repräsentiert, und ferner ein zweites Fehlersignal (46) zu erzeugen, wenn die zweite Kenngröße einen definierten zweiten Schwellenwert überschreitet.

8. Vorrichtung nach einem der Ansprüche 1 bis 7, **dadurch gekennzeichnet, dass** die Lagerstellen (34) Luftlager sind, wobei die erste Sensoreinrichtung (50) Druck- und/oder Durchflussmesser beinhaltet, um die individuellen Lagerbelastungen (64) zu bestimmen.

9. Verfahren zum Bestimmen einer Messgröße an einem Messobjekt, mit den Schritten:

- Bereitstellen eines Messgerätes (10) mit einem Messtisch (30) zum Aufnehmen des Messobjekts (32), mit einer Basis (12), auf der der Messtisch (30) über eine Vielzahl von Lagerstellen (34) abgestützt ist, und mit einer ersten Sensoreinrichtung (20, 22), die dazu ausgebildet ist, eine Anzahl von Messpunkten an dem Messobjekt (32) zu identifizieren,
- Positionieren des Messobjekts (32) auf dem Messtisch (30),
- Bestimmen einer Vielzahl von individuellen Lagerbelastungen (64), wobei jede individuelle Lagerbelastung (64) die mechanische Belastung einer Lagerstelle (34) durch den Messtisch (30) und das Messobjekt (32) repräsentiert, und
- Bestimmen der Messgröße in Abhängigkeit von den identifizierten Messpunkten,

wobei anhand der individuellen Lagerbelastungen (64) eine räumliche Position (36) bestimmt wird, die eine Schwerpunktlage des Messtisches (30) mit dem Messobjekt (32) relativ zu den Lagerstellen (34) repräsentiert und wobei die Messgröße in Abhängigkeit von der räumlichen Position (36) bestimmt wird, **dadurch gekennzeichnet, dass** anhand der individuellen Lagerbelastungen (64) eine erste Kenngröße (68) bestimmt wird, die eine Neigung des Messtisches (30) relativ zu der Basis (12) in Abhängigkeit von dem Messobjekt (32) repräsentiert, wobei die Messgröße ferner in Abhängigkeit von der ersten Kenngröße (68) bestimmt wird.

**Claims**

1. Apparatus for determining a measurement variable on a measurement object (32), comprising

- a measurement stage (30) for arranging the measurement object (32),
- a base (12), on which the measurement stage (30) is supported via a multiplicity of bearing sites (34),
- a first sensor apparatus (20, 22), which is configured to identify a number of measurement points on the measurement object (32),
- a second sensor apparatus (50), which is configured to determine a multiplicity of individual bearing loads (64), each individual bearing load (64) representing the mechanical load on a bearing site (34) by the measurement stage (30) and by the measurement object (32), and
- an evaluation unit (38) for determining the measurement variable in dependence on the identified measurement points,

wherein the evaluation unit (38) is configured to determine, on the basis of the individual bearing loads (64), a spatial position (36) which represents a centre of gravity location of the measurement stage (30) with the measurement object (32) relative to the bearing sites (34), **characterized in that** the evaluation unit (38) is furthermore configured to determine, on the basis of the individual bearing loads (64), a first characteristic variable (68) representing an inclination of the measurement stage (30) relative to the base (12) in dependence on the measurement object (32), wherein the evaluation unit (38) is configured to determine the measurement variable in dependence on the first characteristic variable (68).

2. Apparatus according to Claim 1, **characterized in that** each bearing site (34) has a defined bearing site position relative to the base (12), wherein the evaluation unit (38) is configured to determine the spatial position (36) on the basis of the defined bearing site positions and on the basis of the individual bearing loads (64) at the defined bearing site positions (34).

3. Apparatus according to Claim 1 or 2, **characterized by** an indication means (42), which is configured to indicate the spatial position (36).

4. Apparatus according to one of Claims 1 to 3, **char-**

**acterized in that** the measurement stage (30) is a rotary stage which is rotatable around an axis of rotation (48) at a multiplicity of different rotation positions, wherein the evaluation unit (38) is configured to determine the spatial position (36) for the different rotation positions.

5. Apparatus according to Claim 4, **characterized in that**, when the rotary stage (30) rotates, each individual bearing load (64) varies with a largely periodic pattern (80), wherein the evaluation unit (38) is furthermore configured to determine a rotational speed of the rotary stage (30) on the basis of at least one pattern (80).

6. Apparatus according to one of Claims 1 to 5, **characterized in that** the evaluation unit (38) is configured to generate a first error signal (44) when the first characteristic variable (68) exceeds a defined first threshold.

7. Apparatus according to one of Claims 1 to 6, **characterized in that** the evaluation unit (38) is furthermore configured to determine a second characteristic variable representing an average value of the individual bearing loads (64), and furthermore to generate a second error signal (46) when the second characteristic variable exceeds a defined second threshold.

8. Apparatus according to one of Claims 1 to 7, **characterized in that** the bearing sites (34) are air bearings, wherein the first sensor apparatus (50) contains pressure gauges and/or flow meters for determining the individual bearing loads (64).

9. Method for determining a measurement variable on a measurement object, having the steps of:

- providing a measurement device (10) having a measurement stage (30) for receiving the measurement object (32), having a base (12), on which the measurement stage (30) is supported via a multiplicity of bearing sites (34), and having a first sensor apparatus (20, 22), which is configured to identify a number of measurement points on the measurement object (32),
- positioning the measurement object (32) on the measurement stage (30),
- determining a multiplicity of individual bearing loads (64), each individual bearing load (64) representing the mechanical load on a bearing site (34) by the measurement stage (30) and by the measurement object (32), and
- determining the measurement variable in dependence on the identified measurement points,

wherein, on the basis of the individual bearing loads (64), a spatial position (36) is determined which represents a centre of gravity location of the measurement stage (30) with the measurement object (32) relative to the bearing sites (34), and wherein the measurement variable is determined in dependence on the spatial position (36), **characterized in that**, on the basis of the individual bearing loads (64), a first characteristic variable (68) representing an inclination of the measurement stage (30) relative to the base (12) is determined in dependence on the measurement object (32), wherein the measurement variable is furthermore determined in dependence on the first characteristic variable (68).

## Revendications

1. Dispositif pour déterminer une grandeur de mesure sur un objet de mesure (32), comprenant

- une table de mesure (30) destinée à placer l'objet de mesure (32),
- une base (12) sur laquelle la table de mesure (30) est supportée par une pluralité de points d'appui (34),
- un premier moyen de détection (20, 22) qui est conçu pour identifier un certain nombre de points de mesure sur l'objet de mesure (32),
- un second moyen de détection (50) qui est conçu pour déterminer une pluralité de charges d'appui individuelles (64), chaque charge d'appui individuelle (64) représentant la charge mécanique d'un point d'appui (34) à travers la table de mesure (30) et l'objet de mesure (32), et
- une unité d'évaluation (38) destinée à déterminer la grandeur de mesure en fonction des points de mesure identifiés,

dans lequel l'unité d'évaluation (38) est conçue pour déterminer, sur la base des charges d'appui individuelles (64), une position dans l'espace (36) qui représente une position du centre de gravité de la table de mesure (30) avec l'objet de mesure (32) par rapport aux points d'appui (34), **caractérisé en ce que** l'unité d'évaluation (38) est en outre conçue pour déterminer, sur la base des charges d'appui individuelles (64), une première grandeur caractéristique (68) représentant une inclinaison de la table de mesure (30) par rapport à la base (12) en fonction de l'objet de mesure (32), dans lequel l'unité d'évaluation (38) est conçue pour déterminer la grandeur de mesure en fonction de la première grandeur caractéristique (68).

2. Dispositif selon la revendication 1, **caractérisé en ce que** chaque point d'appui (34) possède une position de point d'appui définie par rapport à la base (12), l'unité d'évaluation (38) étant conçue pour déterminer la position dans l'espace (36) sur la base des positions de points d'appui définies et sur la base des charges d'appui individuelles (64) aux positions de points d'appui définies (34).

3. Dispositif selon la revendication 1 ou 2, **caractérisé par** un dispositif d'affichage (42) qui est conçu pour afficher la position dans l'espace (36).

4. Dispositif selon l'une quelconque des revendications 1 à 3, **caractérisé en ce que** la table de mesure (30) est une table tournante qui peut être mise en rotation autour d'un axe de rotation (48) à une pluralité de positions de rotation différentes, l'unité d'évaluation (38) étant conçue pour déterminer la position dans l'espace (36) pour les différentes positions de rotation.

5. Dispositif selon la revendication 4, **caractérisé en ce que** chaque charge d'appui individuelle (64) varie lors de la rotation de la table tournante (30) selon un motif sensiblement périodique (80), l'unité d'évaluation (38) est en outre conçue pour déterminer une vitesse de rotation de la table tournante (30) sur la base d'au moins un motif (80).

6. Dispositif selon l'une quelconque des revendications 1 à 5, **caractérisé en ce que** l'unité d'évaluation (38) est conçue pour générer un premier signal d'erreur (44) lorsque la première grandeur caractéristique (68) dépasse une première valeur de seuil définie.

7. Dispositif selon l'une quelconque des revendications 1 à 6, **caractérisé en ce que** l'unité d'évaluation (38) est en outre conçue pour déterminer une seconde grandeur caractéristique qui représente une moyenne des charges d'appui individuelles (64), et pour générer en outre un second signal d'erreur (46) lorsque la seconde grandeur caractéristique dépasse une seconde valeur de seuil définie.

8. Dispositif selon l'une quelconque des revendications 1 à 7, **caractérisé en ce que** les points d'appui (34) sont des paliers à air, le premier moyen capteur (50) comprenant un manomètre et/ou un débitmètre pour déterminer les charges d'appui individuelles (64).

9. Procédé pour déterminer une grandeur caractéristique de mesure d'un objet de mesure, comportant les étapes consistant à:

   - fournir un dispositif de mesure (10) comportant une table de mesure (30) destinée à recevoir l'objet de mesure (32), ayant une base (12) sur laquelle la table de mesure (30) prend appui par l'intermédiaire d'une pluralité de points d'appui (34), et comportant un premier dispositif de détection (20, 22) qui est conçu pour identifier un certain nombre de points de mesure sur l'objet de mesure (32),
   - positionner l'objet à tester (32) sur la table de mesure (30),
   - déterminer une pluralité de charges d'appui individuelles (64), chaque charge d'appui individuelle (64) représentant la charge mécanique d'un point d'appui (34) à travers la table de mesure (30) et l'objet de mesure (32), et
   - déterminer la grandeur de mesure en fonction des points de mesure identifiés,

dans lequel, sur la base des charges d'appui individuelles (64), une position dans l'espace (36) qui représente une position du centre de gravité de la table de mesure (30) avec l'objet de mesure (32) est déterminée par rapport aux points d'appui (34) et dans lequel la grandeur de mesure est déterminée en fonction de la position spatiale (36), **caractérisé en ce que**, sur la base des charges d'appui individuelles (64), une première grandeur caractéristique (68) qui représente une inclinaison de la table de mesure (30) par rapport à la base (12) est déterminée en fonction de l'objet de mesure (32), la grandeur de mesure étant en outre déterminée en fonction de la première grandeur caractéristique (68).

Fig.1

Fig.2

Fig.3

Fig.4

Fig.5

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5301544 A
- DE 10006876 C1
- DE 3637410 A1
- DE 3419546 A1

- EP 0866233 A2
- DE 19745216 A1
- DE 3440571 A1
- GB 1557940 A